# EUROPÄISCHE PATENTSCHRIFT

(11) **EP 3 299 147 B1**
(45) Veröffentlichungstag und Bekanntmachung des Hinweises auf die Patenterteilung: **12.08.2020**
(21) Anmeldenummer: 17192761.9
(22) Anmeldetag: 22.09.2017
(51) Int. Cl.: B29C 65/34, B29C 65/82, G01N 29/11, G01N 29/12, G01N 29/34, F16L 47/03, B29K 101/12, B29L 23/00

(54) **VERFAHREN ZUR ZERSTÖRUNGSFREIEN PRÜFUNG EINER SCHWEISSNAHT, DIE MITHILFE DER HEIZWENDELSCHWEISSTECHNIK AUSGEBILDET WORDEN IST, UND EINE ENTSPRECHENDE ANORDNUNG**
METHOD FOR NON-DESTRUCTIVE TESTING OF A WELDING JOINT FORMED BY A LOST ELEMENT WELDING TECHNIQUE, SAID LOST ELEMENT BEING A WINDING, AND CORRESPONDING ARRANGEMENT
PROCÉDÉ D'ESSAI NON DESTRUCTIF D'UN JOINT SOUDÉ CONÇU À L'AIDE D'UNE TECHNIQUE DE SOUDAGE PAR ÉLÉMENT PERDU, LEDIT ÉLÉMENT PERDU ÉTANT UN BOBINAGE, ET DISPOSITIF CORRESPONDANT

(30) Priorität: 23.09.2016 DE 102016118009
(43) Veröffentlichungstag der Anmeldung: 28.03.2018
(73) Patentinhaber: Aliaxis Deutschland GmbH, 68229 Mannheim (DE)
(72) Erfinder: Wilhelm, Markus, 69488 Birkenau (DE); Elsasser, Dirk, 68259 Mannheim (DE)
(74) Vertreter: 24 IP Law Group France

(56) Entgegenhaltungen:
- EP-A1- 2 759 392
- CN-A- 101 101 276
- CN-A- 102 285 120
- CN-A- 103 512 954
- GB-A- 2 501 625
- JP-A- H1 090 232
- JP-A- H10 132 791
- JP-A- H11 132 382
- JP-A- H11 142 376
- JP-A- H11 147 258
- JP-A- 2001 108 662
- JP-A- 2001 221 782
- JP-A- 2002 048 770
- JP-A- 2002 122 576

## Beschreibung

Die Erfindung betrifft ein Verfahren zur zerstörungsfreien Prüfung einer Schweißnaht, die mithilfe der Heizwendelschweißtechnik ausgebildet worden ist, und eine entsprechende Anordnung.

Ein derartiges Verfahren ist aus der GB 2 501 625 A bekannt, die ein Verfahren zur zerstörungsfreien Prüfung einer Schweißnaht zur Verbindung zweier Kunststoffrohrenden beschreibt. Dabei wird das Verbindungsstück der miteinander verschweißten Kunststoffrohre mit einem Ultraschallsignal angeregt und das reflektierte Signal zur Prüfung der Qualität der Schweißnaht verwendet. Ähnliche Verfahren sind auch in der EP 2 759 392 A1, der JP 2001 221782 A. der JP 2002 048770 A. der JP H11 147258 A. der JP H11 142376 A. der JP H11 132382 A. der JP2001 108662 A. der JP H 10 132791 A. der JP H10 90232 A. der JP 2002 122576 A. der CN 101 101 276 A. der CN 102 285 120 A und der CN 103 512 954 A beschrieben.

Ein weiteres Verfahren ist aus der DE 197 24 905 A1 bekannt. Es wird ein Prüfverfahren basierend auf Wärmeausbreitungsvorgängen in der Schweißzone beschrieben, welches darauf der Erkenntnis beruht, dass Fehlstellen einer Schweißverbindung oder auch ein verminderter Querschnitt infolge eines Wanddickenversatzes einen gestörten Wärmedurchgang durch den Querschnitt hervorrufen können. Das beschriebene Verfahren eignet sich insbesondere zur zerstörungsfreien Prüfung von Schweißnähten an stumpfgeschweißten Kunststoffrohren.

Die DE 195 18 011 C2 beschreibt eine elektrische Messeinrichtung zur Erfassung von Undichtigkeiten von Dichtungen oder Anschlüssen an Flüssigkeiten führenden Leitungen, wobei die Dichtungen oder Anschlüsse Hohlräume aufweisen, in denen als elektrische Parallelschwingkreise ausgebildete Sensoren angeordnet sind, die auf eindringende Flüssigkeit ansprechen, wobei die Sensoren einen Drahtring oder eine Drahtwendel aufweisen. Damit wird eine Kombination eines elektrischen Schwingkreises mit einer oder mehreren Dichtungen bereitgestellt, so dass der elektrische Schwingkreis beim Kontakt mit Flüssigkeit seine elektrischen Parameter, insbesondere seine kapazitiven Anteile ändert, wobei diese Änderungen elektronisch erfasst und für die Leckagebestimmung ausgewertet werden kann. Ein ähnliches Verfahren ist auch aus der US 4,949,076 A bekannt.

Die EP 2 825 369 B1 beschreibt eine Elektroschweißmuffe zur Verbindung zweier Kunststoffrohrenden, wobei die Elektroschweißmuffe mindestens ein als Heizwendel ausgebildetes Heizelement aufweist, das an einem Innenumfang der Muffe angeordnet und dazu ausgelegt ist, eine Schweißnaht zwischen der Elektroschweißmuffe und den aneinander grenzenden Rohrenden auszubilden. Ein Kanal erstreckt sich zumindest anteilig durch die Elektroschweißmuffe hindurch, um über diesen einen fluidischen Zugang zu einem Testbereich zwischen der Elekroschweißmuffe und den Rohrenden herzustellen, so dass ein Leckagetest der Schweißnaht durchgeführt werden kann.

Die aus dem Stand der Technik bekannten Vorrichtungen und Verfahren haben insbesondere den Nachteil, dass sie vergleichsweise aufwendig gestaltet sind, da sie in der Regel allein für die Leckagemessung erforderliche Bauteile, beispielsweise integrierte Leiterwendeln benötigen. Andere der beschriebenen Verfahren, welche die Bereitstellung von Prüfkanälen im Schweißzonenbereich vorsehen, haben den Nachteil, dass die Prüfkanäle die Festigkeit, insbesondere auch die Leckagefestigkeit des Rohrs negativ beeinflussen.

Es ist daher die Aufgabe der Erfindung, ein zerstörungsfreies Prüfverfahren der eingangs beschriebenen Art vorzuschlagen, das mit möglichst einfachen technischen Mitteln durchführbar ist.

Diese Aufgabe wird durch ein Verfahren mit den Merkmalen des Anspruchs 1 gelöst. Die abhängigen Ansprüche betreffen jeweils vorteilhafte Ausführungsformen der Erfindung.

Demgemäß weist das Verfahren die Schritte auf:
- Anregen einer Heizwendel in einer die Schweißnaht aufweisenden Schweißzone zwischen mindestens zwei über die Heizwendel miteinander verschweißten Bauteilen mit mindestens einem Erregersignal mit einer Erregersignalamplitude und einer Erregersignalfrequenz oder einem Erregersignalfrequenz-Sweep mit variierender Erregersignalfrequenz zu einer Schwingung;
- Variieren des Erregersignals hinsichtlich der Erregersignalfrequenz und/oder der Erregersignalamplitude, mit denen die Heizwendel angeregt wird und Bestimmen mindestens eines Resonanzsignals, insbesondere mindestens einer Resonanzsignalamplitude und/oder mindestens einer Resonanzsignalfrequenz, der Schweißzone oder der miteinander verschweißten Bauteile;
- Vergleichen des bestimmten Resonanzsignals mit mindestens einem Referenzwert für das Resonanzsignal der Schweißzone oder der miteinander verschweißten Bauteile, wobei auf eine ordnungsgemäße Schweißnaht geschlossen wird, wenn eine Abweichung zwischen des bestimmten Resonanzsignals und dem mindestens einen Referenzwert einen Maximalwert nicht überschreitet.

Die Erfindung macht sich somit die für die Heizwendelschweißtechnik ohnehin vorgesehene Heizwendel zunutze, um die Güte einer zuvor mit dieser ausgebildeten Schweißnaht zu analysieren. Die Heizwendel kann beispielsweise Bestandteil einer als Sattelbauteil ausgebildeten Anbohrarmatur oder Bestandteil einer Schweißmuffe für die Verbindung zweier Rohrenden sein. Die für die Ausbildung der Schweißnaht ohnehin vorgesehene und im verschweißten Zustand in der Schweißzone angeordnete Heizwendel bildet somit einen Schwingungsresonator und wird somit für die zerstörungsfreie Prüfung der Schweißnaht einer Zweitverwendung zugeführt.

Beispielsweise kann die Heizwendel im Rahmen der Impulserregertechnik verwendet werden, bei der der zu messende Prüfling zerstörungsfrei und durch einen elastischen Stoß zu einer definierten Schwingung angeregt. Das Schwingungssignal wird durch einen geeigneten Sensor, beispielsweise ein Piezo-Detektor oder ein Mikrofon aufgenommen und analysiert. Es sind Messgeräte mit solchen Sensoren bekannt, die flexurale, torsionale und longitudinale Schwingungen aufnehmen und analysieren. Es hat sich herausgestellt, dass die Resonanzfrequenz der Heizwendel bzw, der starr mit der Heizwendel verbundenen Bauteile abhängig von der Beschaffenheit der Schweißnaht ist. Insbesondere können Hohlräume in der Schweißnaht messbaren Einfluss auf die Eigenfrequenz des Messkörpers haben.

Die Erregerfrequenz ist grundsätzlich auf keine bestimmten Frequenzbereiche beschränkt. In der Regel wird jedoch bereits vor der Einleitung der Schweißnahtprüfung ein geeignetes Frequenzband bekannt sein, in dem die mindestens eine zu bestimmende Resonanzfrequenz erwartet wird. Nur beispielhaft kann vorgesehen sein, beim Variieren der Erregerfrequenz die Erregerfrequenz über ein Frequenzband zwischen 20 Hz und 6 MHz oder auch nur über ein Frequenzband zwischen 40 Hz und 100 kHz durchzustimmen. Es kann auch vorgesehen sein, einerseits zwar große Frequenzbandbreiten durchzumessen, die Frequenzschrittweite zwischen benachbarten Messpunkten im Bereich von Resonanzfrequenzen zur Verbesserung der Messpräzision abzusenken, um so einen Kompromiss zwischen Messdauer und Messgenauigkeit zu schaffen.

Das Bestimmen der Resonanzfrequenz oder des Frequenzbandes der Schwingung der Heizwendel kann insbesondere das Bestimmen mindestens einer flexuralen, torsionalen und/oder longitudinalen Schwingungsfrequenz der Schweißzone oder der miteinander verschweißten Bauteile umfassen.

Das Erregersignal kann ein Sinussignal, ein Dreiecksignal oder ein Rechtecksignal sein und das Variieren des Erregersignals das Variieren der Erregersignalfrequenz und/oder der Erregersignalamplitude umfassen.

Weiterhin kann das das Bestimmen mindestens einer Resonanzfrequenz oder des Frequenzbandes der Schwingung der Heizwendel des Resonanzsignals das Bestimmen eines Resonanzmusters, insbesondere einer Resonanzkurve aufweisen. Vergleichen der mindestens einen bestimmten Resonanzfrequenz oder des Frequenzbandes der Schwingung des bestimmten Resonanzsignals mit mindestens einem Referenzwert kann das Vergleichen des bestimmten Resonanzmusters oder der bestimmten Resonanzkurve mit einem Referenzmuster oder einer Referenzkurve aufweisen. Das Resonanzmuster bzw. die Resonanzkurve können durch Erfassen der Amplitudenresonanz der Heizwendel in Abhängigkeit der Erregerfrequenz ermittelt werden.

Das Anregen der Heizwendel kann das mechanische, akustische, elektrische, magnetische oder elektromagnetische Anregen der Heizwendel aufweisen. Bei dem mechanischen Anregen der Heizwendel kann die Heizwendel indirekt durch mechanische Beaufschlagung eines der beiden Bauteile, vorzugsweise desjenigen, das die Heizwendel bereitstellt, insbesondere eine Verbindungsmuffe oder ein Fitting, angeregt werden.

Es kann vorgesehen sein, dass dieselbe Heizwendel, die zuvor für die Ausbildung der Schweißzone und damit für die Verbindung der Bauteile verwendet worden ist, durch Strombeaufschlagung mittels des Schweißgeräts, das zuvor für die Ausbildung der Schweißzone verwendet wurde, erfindungsgemäß angeregt wird. Es ist somit für die Prüfung der Schweißzone kein weiteres Werkzeug oder Gerät erforderlich. Dazu können die beiden elektrischen Pole des Schweißgeräts an jeweils einen von zwei Kontakten des die Heizwendel aufweisenden Bauteils angeschlossen werden. Diese Ausführungsform hat den besonderen Vorteil, dass über die ohnehin für die Verbindung der Bauteile mithilfe der Heizwendelschweißtechnik erforderlichen Geräte hinaus keine weiteren Geräte erforderlich sind. Es kann insbesondere das für die Verschweißung der Bauteile erforderliche Schweißgerät um die für die Durchführung der Impulserregungstechnik erforderlichen Funktionen erweitert werden. Insbesondere können auch die Kontakte, über welche das Schweißgerät für das Verschweißen der Bauteile miteinander an das die Heizwendel aufweisende Bauteil angeschlossen ist, ebenso dazu verwendet werden, um für die Anregung der Heizwendel zu einer mechanischen Schwingung erforderliche Stromimpulse in die Heizwendel einzubringen. Dies ermöglicht es, dass unmittelbar nach dem Verschweißen der Bauteile miteinander das Schweißgerät in einen Prüfmodus umschaltet, entweder manuell ausgelöst oder automatisch, um die soeben ausgeführte Schweißnaht hinsichtlich ihrer Güte auszuwerten. Dazu kann eine gepulste Strombeaufschlagung der Heizwendel über das Schweißgerät vorgesehen sein.

Wenn die Heizwendel mechanisch angeregt wird, kann dies entweder unmittelbar über elektrische Kontakte zum Anschluss eines Schweißgeräts an die Heizwendel oder mittelbar erfolgen, wobei bei dem mittelbaren mechanischen Anregen mindestens eines der beiden über die Heizwendel miteinander verschweißten Bauteile, beispielsweise über einen Schlagbolzen, angeregt wird. Das unmittelbare Anregen der Heizwendel kann das Anschlagen der Heizwendel umfassen.

Für die Detektion der Schwingungsanregung der Heizwendel kann eine infolge der Anregung von der Heizwendel ausgeführte Schwingung mit einem entlang der Schweißzone verschieblichen Sensor erfasst werden. Wenn die angeregte Schwingung eine mechanische Schwingung ist, kann der Sensor beispielsweise ein Piezo-Detektor sein. Der Sensor kann beispielsweise axial oder radial zu einer Symmetrieachse eines der miteinander verschweißten Bauteile bewegt werden. Der Sensor kann auch ortsfest im Bereich der Schweißzone angeordnet sein.

Der Referenzwert kann ein aus geometrischen und/oder mechanischen Eigenschaften einer optimalen Schweißzone berechneter Wert, oder ein an einer Referenzanordnung mit bekannter Schweißzonengüte gemessener Wert sein.

Das Anregen der Heizwendel kann mithilfe eines elektromagnetischen oder mechanischen Erregersignals erfolgen, das von einem in oder auf einem der beiden miteinander verschweißten Bauteile angeordneten Erreger erzeugt, über die Masse des Bauteils bis in die Schweißzone geleitet und dort auf die Heizwendel übertragen wird.

Gemäß einem anderen Aspekt der Erfindung wird eine Anordnung zur Durchführung eines Verfahrens der zuvor beschriebene Art offenbart, wobei die Anordnung ein erstes und ein zweites über eine Schweißzone miteinander verbundenes thermoplastisches Bauteil aufweist und das erste Bauteil eine Heizwendel aufweist, die in der Schweißzone angeordnet ist. Die Anordnung weist einen Schwingungserzeuger auf, der mit der Heizwendel mechanisch, elektrisch und/oder magnetisch gekoppelt ist, und das zweite Bauteil weist einen Schwingungssensor auf, der dazu eingerichtet ist, eine Schwingung des zweiten Bauteils hinsichtlich Amplitude und/oder Frequenz, mithin das von der Schweißzone auf das zweite Bauteil übertragene Resonanzsignal zu erfassen.

Der Schwingungserzeuger kann ein mechanischer Schwingungserzeuger sein, der auf dem Außenumfang des ersten Bauteils an dem ersten Bauteil festgelegt ist.

Der Schwingungssensor kann ein mechanischer Schwingungssensor sein, der auf dem Außenumfang des zweiten Bauteils an dem zweiten Bauteil festgelegt ist.

Der Schwingungssensor kann angrenzend an das erste Bauteil oder dem ersten Bauteil unmittelbar vorgelagert auf dem zweiten Bauteil festgelegt sein.

Der Schwingungserzeuger und/oder der Schwingungssensor können reversibel an den Bauteilen festgelegt sein. Beispielsweise kann der Schwingungserzeuger mit einem um den Außenumfang des Bauteils gelegten Spanngurt an dem Bauteil festgelegt sein, wobei aufgrund der Vorspannung des Spanngurts die erforderliche mechanische Kopplung zwischen dem Bauteil und dem Schwingungserzeuger hergestellt wird.

Beispielhafte Ausführungsformen der Erfindung werden anhand der nachstehenden Figuren erläutert. Dabei zeigt:
- Figur 1: eine beispielhafte Ausführungsform des Verfahrens zur zerstörungsfreien Prüfung einer Schweißnaht;
- Figur 2: eine beispielhafte Messanordnung zur zerstörungsfreien Prüfung einer Schweißnaht gemäß einer Ausführungsform der Erfindung;
- Figur 3: eine beispielhafte Messanordnung zur zerstörungsfreien Prüfung einer Schweißnaht gemäß einer weiteren Ausführungsform der Erfindung;
- Figur 4: eine grafische Darstellung des zeitlichen Verlaufs der Frequenz eines Erregersignals;
- Figur 5: eine grafische Darstellung des Resonanzsignals bei fehlerfreier Schweißnaht; und
- Figur 6: eine grafische Darstellung der Überlagerung dreier Resonanzverläufe einer Messung einer fehlerfreien und zwei fehlerbehafteter Schweißzonen.

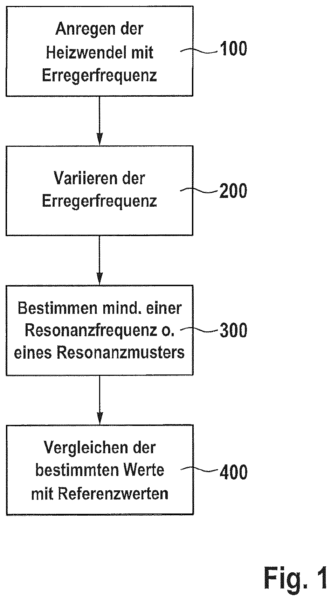

Bei dem in Figur 1 dargestellten Verfahren wird in einem ersten Schritt 100 eine Heizwendel zu einer mechanischen Schwingung angeregt, die in einer die Schweißnaht aufweisenden Schweißzone zwischen mindestens zwei über die Heizwendel miteinander verschweißten Bauteilen angeordnet ist. Die miteinander verschweißten Bauteile sind auf keine besonderen Anordnungen beschränkt. Die miteinander verschweißten Bauteile können beispielsweise ein rohrförmiges Bauteil und ein darauf aufgesetztes Sattelbauteil sein, etwa eine Anbohrarmatur, wobei die Anbohrarmatur ein Sattelelement mit einer Auflagefläche aufweist, über die die Anbohrarmatur auf das rohrförmige Bauteil aufgesetzt ist. Eingelassen in die Auflagefläche und eventuell an dieser partiell freiliegend ist die Heizwendel in dem Sattelelement angeordnet. Das Sattelelement weist Kontaktanschlüsse für den Anschluss eines externen Schweißgeräts zur Bereitstellung eines Schweißstroms auf. Über dieselben Anschlüsse kann zur Anregung der Heizwendel zu einer mechanischen Schwingung ein gepulster Erregerstrom in die Heizwendel eingeleitet werden, wodurch dieser anschwingt. Alternativ kann die Heizwendel auch mechanisch angeregt werden, beispielsweise durch einen an oder auf dem Außenumfang des die heizwendelaufweisenden Bauteils aufgesetzten Schwingungserzeuger.

Wenn für die zerstörungsfreie Prüfung der Schweißnaht die Heizwendel durch Einleitung eines gepulsten Stromes zu einer mechanischen Schwingung angeregt wird, so kann in dem Schritt 200 mindestens eine Eigenfrequenz der Heizwendel dadurch bestimmt werden, dass die Frequenz des gepulsten Erregerstroms innerhalb einer bestimmten Frequenzbreite, innerhalb welcher die Resonanzfrequenz erwartet wird, beispielsweise zwischen 40 Hz und 100 kHz, durchgestimmt und in dem Schritt 300 die bei der mindestens einen Resonanzfrequenz auftretende Amplitudenüberhöhung der Heizwendelschwingung zur Bestimmung einer Resonanzfrequenz der Heizwendel erfasst wird.

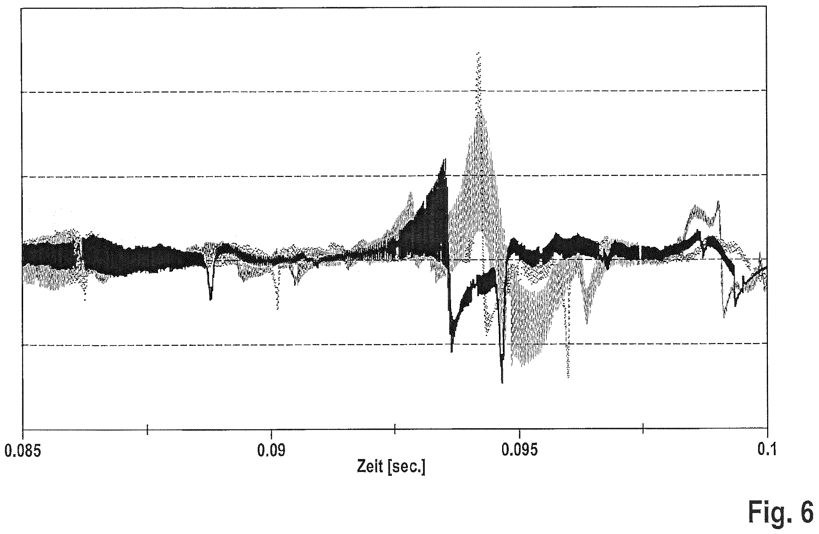

Das Maß der Anregung der Heizwendel, insbesondere ein Maß für die Amplitude der von der Heizwendel ausgeführten mechanischen Schwingung kann über geeignete Sensoren, beispielsweise über Piezo-Sensoren ermittelt werden. Beispielsweise kann das von der Firma Lemmens N.V. unter der Bezeichnung "GrindoSonic" angebotene Messgerät für die Anregung der Heizwendel und/oder für die Auswertung der Schwingungsanregung der Heizwendel verwendet werden. Dazu kann auch ein Resonanzmuster und/oder eine Resonanzkurve aufgenommen werden, bei der die Amplitudenresonanz der Heizwendel über die Erregerfrequenz aufgetragen ist, um so, vorzugsweise computergestützt, mit einem Referenzmuster oder einer Referenzkurve abgeglichen zu werden. Dies kann beispielsweise die Ermittlung einer Peakverschiebung zwischen dem mindestens einen gemessenen Amplitudenpeak und einem Amplitudenpeak der Referenzkurve bzw. des Referenzmusters umfassen. Bei Überschreiten einer je nach Anspruch des Anwenders bemessenen Maximalverschiebung kann angenommen werden, dass die ausgemessene Schweißnaht mangelhaft ist (siehe auch Figur 6).

Es kann insbesondere auch vorgesehen sein, dass die für die Anregung der Heizwendel und die Analyse der angeregten Schwingung der Heizwendel, mithin alle für die Ausführung der Impulserregertechnik erforderlichen Geräte, in das Schweißgerät, welches ohnehin für die Ausbildung der Schweißnaht erforderlich ist, integriert sind, so dass mit ein und demselben (Schweiß-)Gerät sowohl die Schweißnaht erzeugt als auch auf ihre Güte überprüft werden kann.

In einem finalen Schritt 400 wird die in dem Schritt 300 ermittelte mindestens eine Resonanzfrequenz bzw. das Resonanzmuster oder die Resonanzkurve mit mindestens einem entsprechenden Referenzwert für die jeweilige Resonanzfrequenz der Heizwendel bzw. einer Referenzkurve oder einem Referenzmuster verglichen, wobei auf eine ordnungsgemäße Schweißnaht geschlossen wird, wenn eine Abweichung zwischen den bestimmten Resonanzfrequenzen bzw. Referenzkurven oder Referenzmustern und den jeweiligen Referenzen für das Resonanzverhalten der Heizwendel einen Maximalwert nicht überschreitet.

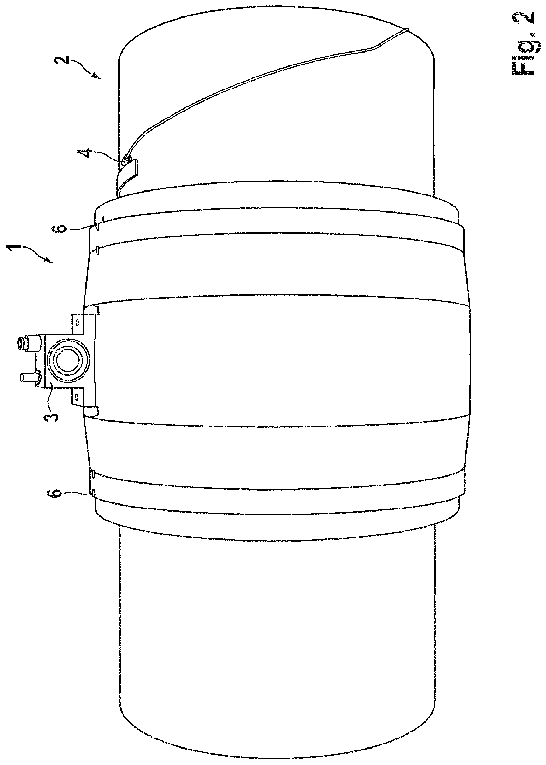

Die Figur 2 zeigt eine beispielhafte Ausführungsform einer Anordnung zur zerstörungsfreien Prüfung einer Schweißnaht. Die Anordnung besteht aus einem ersten Bauteil 1, das als ein Schweißfitting ausgebildet ist, wie er zur fluidisch dichten Verbindung zweier Rohrenden verwendet wird. Das erste Bauteil 1 weist an seinem Innenumfang eine Heizwendel auf, die in der gezeigten Außendarstellung nicht sichtbar ist. Über Schweißkontakte 6 ist die Heizwendel über den Außenumfang des ersten Bauteils 1 elektrisch kontaktierbar und über ein gängiges Schweißgerät mit einem Schweißstrom beaufschlagbar. Ein zweites Bauteil 2 ist in den Fitting leingeschoben. Das zweite Bauteil 2 kann beispielsweise ein Rohr sein. Beide Bauteile 1 und 2 bestehen im Wesentlichen aus einem thermoplastischen Material, wobei der Fitting 1 darüber hinaus insbesondere die Heizwendel aufweist, welche üblicherweise als ein elektrischer Leiter, beispielsweise als ein Draht aus einer Kupferlegierung ausgebildet ist.

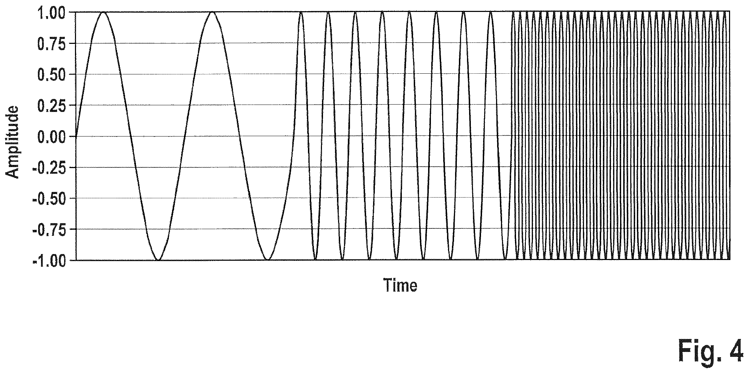

Auf den Außenumfang des ersten Bauteils 1 ist ein mechanischer Schwingungserzeuger 3 aufgesetzt und mit dem ersten Bauteil 1 mechanisch gekoppelt. Dazu kann der Schwingungserzeuger 3 auf dem Außenumfang des Fittings 1 aufgeklebt sein. Der Schwingungserzeuger 3 ist durchstimmbar, das heißt er weist eine Erregerfrequenz und/oder eine Erregeramplitude auf, deren Ausprägung abhängig von der Beaufschlagung des Schwingungserzeugers mit elektrischer Energie ist. Die von dem Schwingungserzeuger 3 erzeugte Schwingungsenergie wird über die Masse des Fittings 1 auf die in den Fitting 1 eingebettete Heizwendel in der zwischen den Bauteilen 1 und 2 ausgebildeten Schweißzone übertragen. Wenn die Erregerfrequenz des Schwingungserzeugers 3 durchgestimmt wird (vergleiche Figur 4) durchläuft die Erregerfrequenz Frequenzbereiche, in denen die Eigenfrequenz der Heizwendel liegt. Je nach Güte der Schweißzone zwischen den Bauteilen 1 und 2, insbesondere abhängig davon, ob die Schweißzone Hohlräume aufweist, oder ob über den gesamten Außenumfang des Bauteils 2 beziehungsweise den gesamten Innenumfang des ersten Bauteils 1 eine kontinuierliche stoffschlüssige Verbindung hergestellt ist, wird die Eigenschwingung der Heizwendel in ihrem Resonanzbereich definiert (hohe Schweißgüte) oder undefiniert (schlechte Schweißgüte) auf das zweite Bauteil übertragen und von dem Schwingungssensor 4 erfasst. Das Resonanzsignal kann bei schlechter Güte der Schweißzone immer Vergleich zu einer Messung bei hoher Güte eine Frequenzverschiebung des Peaks und/oder eine Absenkung des Maximalwerts des Peaks und/oder eine erweiterte Peakbreite aufweisen. Der Schwingungssensor 4 kann mit dem zweiten Bauteil verklebt und damit mechanisch gekoppelt sein.

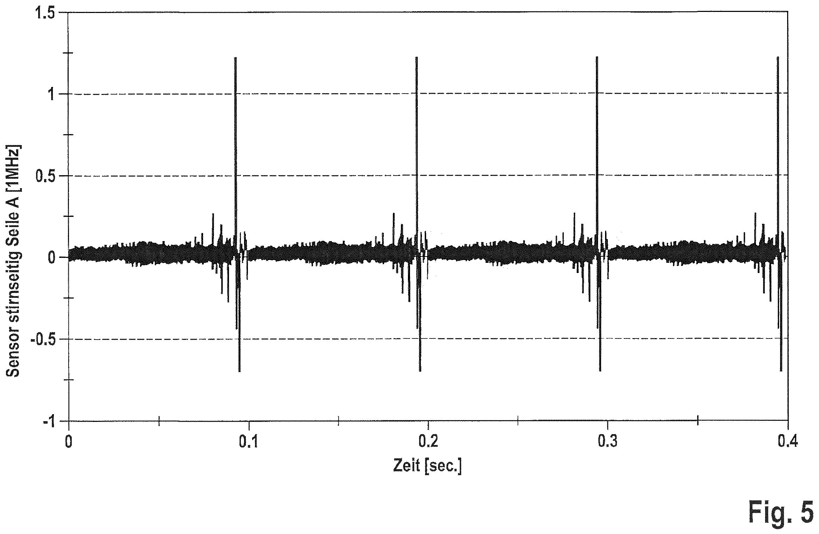

Die Figur 5 zeigt den zeitlichen Verlauf eines Resonanzsignals bei ordnungsgemäßer Schweißung. Das Resonanzsignal zeichnet sich insbesondere durch seine scharfen und regelmäßig beabstandeten Peaks aus, welche die definierte Anschwingung der Heizwendel wiedergeben, wenn die Erregungsfrequenz eine Resonanzfrequenz der Heizwendel einnimmt. Bei einer ordnungsgemäßen Verschweißung ist die Heizwendel über ihre gesamte Länge und den gesamten Umfang in Kunststoffmaterial eingebettet, so dass eine gute Schwingungsübertragung zwischen der Heizwendel und dem zweiten Bauteil 2 und damit ein definierter Übergang der Resonanzfrequenz der Heizwendel auf das zweite Bauteil 2 gegeben ist.

Wenn jedoch die Schweißzone Fehlstellen aufweist und damit die Übertragung der mechanischen Schwingung der Heizwendel aufgrund der fehlenden Materialeinbettung der Wendel an den Fehlstellen behindert ist, weicht das an dem zweiten Bauteil 2 messbare Resonanzsignal auf, wie dies in Figur 6 dargestellt ist.

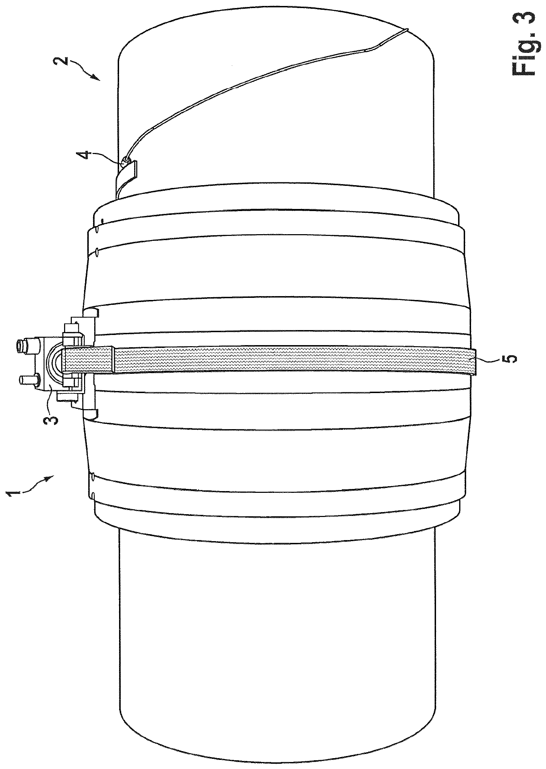

In Abwandlung in der in Figur 2 gezeigten Ausführungsform ist bei der in Figur 3 gezeigten Ausführungsform ein Spanngurt 5 vorgesehen, mit dem der Schwingungserzeuger auf den Außenumfang des ersten Bauteils 1 aufgespannt ist, so dass der Schwingungserzeuger nach erfolgter Überprüfung der Schweißzone problemlos von dem Fitting 1 entfernt werden kann. Ebenso kann der Schwingungssensor 4 reversibel auf dem Außenumfang des zweiten Bauteils 2 festgeklebt sein.

### Bezugszeichenliste

- 1: erstes Bauteil
- 2: zweites Bauteil
- 3: Schwingungserzeuger
- 4: Schwingungssensor
- 5: Gurt
- 6: Schweißkontakt
- 100: Anregen
- 200: Variieren
- 300: Bestimmen
- 400: Vergleichen

## Patentansprüche

1. Verfahren zur zerstörungsfreien Prüfung einer Schweißnaht, die mithilfe der Heizwendelschweißtechnik ausgebildet worden ist, wobei das Verfahren die Schritte aufweist:
- Anregen (100) einer Heizwendel in einer die Schweißnaht aufweisenden Schweißzone zwischen mindestens zwei über die Heizwendel miteinander verschweißten Bauteilen mit mindestens einem Erregersignal mit einer Erregersignalamplitude und einer Erregersignalfrequenz oder einem Erregersignalfrequenz-Sweep mit variierender Erregersignalfrequenz zu einer Schwingung;
- Variieren (200) des Erregersignals hinsichtlich der Erregersignalfrequenz und/oder der Erregersignalamplitude, mit denen die Heizwendel angeregt wird und Bestimmen (300) mindestens eines Resonanzsignals, insbesondere einer Resonanzsignalamplitude oder einer Resonanzsignalfrequenz, der Schweißzone oder der miteinander verschweißten Bauteile;
- Vergleichen (400) des bestimmten Resonanzsignals mit mindestens einem Referenzwert für das Resonanzsignal der Schweißzone oder der miteinander verschweißten Bauteile, wobei auf eine ordnungsgemäße Schweißnaht geschlossen wird, wenn eine Abweichung zwischen des bestimmten Resonanzsignals und dem mindestens einen Referenzwert einen Maximalwert nicht überschreitet.

2. Verfahren nach Anspruch 1, bei dem beim Variieren (200) der Erregersignalfrequenz die Erregersignalfrequenz über ein Frequenzband zwischen 20 Hz und 6 MHz und vorzugsweise über ein Frequenzband zwischen 40 Hz und 100 kHz durchgestimmt wird.

3. Verfahren nach Anspruch 1 oder 2, bei dem beim Bestimmen (300) des Resonanzsignals das Bestimmen mindestens einer flexuralen, torsionalen und/oder longitudinalen Schwingungsfrequenz der Schweißzone oder der miteinander verschweißten Bauteile umfasst.

4. Verfahren nach einem der vorangegangenen Ansprüche, bei dem das Erregersignal ein Sinussignal, ein Dreiecksignal oder ein Rechtecksignal ist und das Variieren des Erregersignals das Variieren der Erregersignalfrequenz und der Erregersignalamplitude umfasst.

5. Verfahren nach einem der vorangegangenen Ansprüche, bei dem das Bestimmen (300) des Resonanzsignals das Bestimmen eines Resonanzmusters, insbesondere einer Resonanzkurve aufweist.

6. Verfahren nach Anspruch 5, das weiterhin bei dem Vergleichen (400) des bestimmten Resonanzsignals mit mindestens einem Referenzwert das Vergleichen (400) des bestimmten Resonanzmusters oder der bestimmten Resonanzkurve mit einem Referenzmuster oder einer Referenzkurve aufweist.

7. Verfahren nach einem der vorangegangenen Ansprüche, bei dem das Anregen der Heizwendel, das mechanische, akustische, elektrische, magnetische oder elektromagnetische Anregen der Heizwendel aufweist.

8. Verfahren nach Anspruch 7, bei dem bei dem mechanischen Anregen der Heizwendel die Heizwendel indirekt durch mechanische Beaufschlagung eines der beiden Bauteile, vorzugsweise desjenigen, das die Heizwendel bereitstellt, insbesondere eine Verbindungsmuffe oder ein Fitting, angeregt wird.

9. Verfahren nach einem der vorangegangen Ansprüche, bei dem die Heizwendel durch Strombeaufschlagung mittels eines Schweißgeräts für die Ausbildung der Schweißnaht mithilfe der Heizwendelschweißtechnik angeregt wird, wozu die beiden elektrischen Pole des Schweißgeräts an jeweils einen von zwei Kontakten des die Heizwendel aufweisenden Bauteils angeschlossen sind.

10. Verfahren nach Anspruch 8 oder 9, bei dem die Strombeaufschlagung der Heizwendel gepulst wird.

11. Verfahren nach Anspruch 7, bei dem die Heizwendel mechanisch angeregt wird, entweder unmittelbar über elektrische Kontakte zum Anschluss eines Schweißgeräts an die Heizwendel oder mittelbar, wobei bei dem mittelbaren mechanischen Anregen mindestens eines der beiden über die Heizwendel miteinander verschweißten Bauteile, beispielsweise über einen Schlagbolzen, angeregt wird.

12. Verfahren nach einem der vorangegangenen Ansprüche, bei dem eine infolge der Anregung (100) von der Heizwendel ausgeführte Schwingung mit einem entlang der Schweißzone verschieblichen Sensor, vorzugsweise mit einem Piezo-Sensor, erfasst wird.

13. Verfahren nach einem der vorangegangenen Ansprüche, bei dem der Referenzwert ein aus geometrischen und mechanischen Eigenschaften einer optimalen Schweißzone berechneter Wert oder ein an einer Referenzanordnung mit bekannter Schweißzonengüte gemessener Wert ist.

14. Verfahren nach einem der vorangegangenen Ansprüche, bei dem das Anregen (100) der Heizwendel mithilfe eines elektromagnetischen oder mechanischen Erregersignals erfolgt, das von einem in oder auf mindestens einem der beiden miteinander verschweißten Bauteile angeordneten Erreger erzeugt, über die Masse des Bauteils bis in die Schweißzone geleitet und dort auf die Heizwendel übertragen wird.

15. Anordnung zur Durchführung eines Verfahrens nach einem der vorangegangenen Ansprüche, wobei die Anordnung ein erstes und ein zweites über eine Schweißzone miteinander verbundenes thermoplastisches Bauteil (1, 2) aufweist, wobei das erste Bauteil (1) eine Heizwendel aufweist, die in der Schweißzone angeordnet ist, wobei die Anordnung einen Schwingungserzeuger (3) aufweist, der mit der Heizwendel mechanisch, elektrisch und/oder magnetisch gekoppelt ist, **dadurch gekennzeichnet, dass** das zweite Bauteil (2) mindestens einen Schwingungssensor (4) aufweist, der dazu eingerichtet ist, ein von der Schweißzone auf das zweite Bauteil (2) übertragenes Resonanzsignal zu erfassen.

16. Anordnung nach Anspruch 15, bei der der Schwingungserzeuger (3) ein mechanischer Schwingungserzeuger ist, der auf dem Außenumfang des ersten Bauteils (1) an dem ersten Bauteil (1) festgelegt ist.

17. Anordnung nach Anspruch 15 oder 16, bei der mindestens eine Schwingungssensor (4) ein mechanischer Schwingungssensor ist, der auf dem Außenumfang des zweiten Bauteils (2) an dem zweiten Bauteil (2) festgelegt ist.

18. Anordnung nach Anspruch 17, bei der mindestens eine Schwingungssensor (4) angrenzend an das erste Bauteil (1) oder dem ersten Bauteil (1) unmittelbar vorgelagert auf dem zweiten Bauteil (2) festgelegt ist.

## Claims

1. Method for non-destructive testing of a weld seam which has been formed with the aid of heating coil (electrofusion) welding technology, the method comprising the steps of:
- providing excitation (100) of a heating coil in a welding zone comprising the weld seam between at least two components welded together via the heating coil by means of at least one excitation signal with an excitation signal amplitude and an excitation signal frequency or an excitation signal frequency sweep with varying excitation signal frequency for oscillation;
- varying (200) the excitation signal with respect to the excitation signal frequency and/or the excitation signal amplitude with which the heating coil is excited and determining (300) at least one resonance signal, in particular a resonance signal amplitude or a resonance signal frequency, of the welding zone or the components welded together;
- comparing (400) the determined resonance signal with at least one reference value for the resonance signal of the welding zone or of the components welded together, wherein a proper weld seam is concluded if a deviation between the determined resonance signal and the at least one reference value does not exceed a maximum value.

2. Method according to claim 1, in which when varying (200) the excitation signal frequency, the excitation signal frequency is tuned over a frequency band between 20 Hz and 6 MHz and preferably over a frequency band between 40 Hz and 100 kHz.

3. Method according to claim 1 or 2, in which, when determining (300) the resonance signal, the method comprises determining at least one flexural, torsional and/or longitudinal oscillation frequency of the welding zone or the components welded together.

4. Method according to any one of the preceding claims, in which the excitation signal is a sinusoidal signal, a triangular signal or a rectangular signal and the variation of the excitation signal comprises the variation of the excitation signal frequency and the excitation signal amplitude.

5. Method according to any one of the preceding claims, in which determining (300) the resonance signal comprises determining a resonance pattern, in particular a resonance curve.

6. Method according to claim 5, which further comprises, when comparing (400) the determined resonance signal with at least one reference value, comparing (400) the determined resonance pattern or the determined resonance curve with a reference pattern or a reference curve.

7. Method according to any one of the preceding claims, in which providing excitation of the heating coil comprises providing mechanical, acoustic, electrical, magnetic or electromagnetic excitation of the heating coil.

8. Method according to claim 7, in which, when providing mechanical excitation of the heating coil, the heating coil is excited indirectly by mechanical action on one of the two components, preferably the one which provides the heating coil, in particular a connecting sleeve or fitting.

9. Method according to any one of the preceding claims, in which the heating coil is excited by current application by means of a welding device for forming the weld seam using the heating coil welding technique, for which purpose the two electrical poles of the welding device are each connected to one of two contacts of the component comprising the heating coil.

10. Method according to claim 8 or 9, in which the current application to the heating coil is pulsed.

11. Method according to claim 7, in which the heating coil is excited mechanically, either directly via electrical contacts for connecting a welding device to the heating coil or indirectly, wherein in the case of the indirect mechanical excitation at least one of the two components welded together via the heating coil is excited, for example via a firing pin.

12. Method according to any one of the preceding claims, in which an oscillation carried out by the heating coil as a result of the excitation (100) is detected by a sensor, preferably a piezo sensor, which can be displaced along the welding zone.

13. Method according to any one of the preceding claims, in which the reference value is a value calculated from geometrical and mechanical properties of an optimum welding zone or a value measured on a reference arrangement with known welding zone quality.

14. Method according to any one of the preceding claims, in which the providing excitation (100) of the heating coil is effected with the aid of an electromagnetic or mechanical excitation signal which is generated by an exciter arranged in or on at least one of the two components welded together, is conducted via the mass of the component into the welding zone and there transmitted to the heating coil.

15. Arrangement for carrying out a method according to any one of the preceding claims, the arrangement having a first and a second thermoplastic component (1, 2) connected to one another via a welding zone, the first component (1) having a heating coil which is arranged in the welding zone, the arrangement having an oscillator (3) which is mechanically, electrically and/or magnetically coupled to the heating coil, **characterized in that** the second component (2) comprises at least one vibration sensor (4) which is arranged to detect a resonance signal transmitted from the welding zone to the second component (2).

16. Arrangement according to claim 15, wherein the oscillator (3) is a mechanical oscillator vibration generator which is fixed to the first component (1), on the outer circumference of the first component (1).

17. Arrangement according to claim 15 or 16, in which at least one vibration sensor (4) is a mechanical vibration sensor which is fixed to the second component (2), on the outer circumference of the second component (2).

18. Arrangement according to claim 17, in which at least one vibration sensor (4) is fixed to the second component (2) adjacent to the first component (1) or directly upstream of the first component (1).

## Revendications

1. Procédé pour le contrôle non destructif d'un cordon de soudure qui a été formé à l'aide de la technologie de soudage par spires chauffantes (électrofusion), dans lequel le procédé comprend les étapes de :
prévoir une excitation (100) de spires chauffantes dans une zone de soudure comprenant le cordon de soudure entre au moins deux composants soudés ensemble par l'intermédiaire des spires chauffantes au moyen d'au moins un signal d'excitation avec une amplitude de signal d'excitation et une fréquence de signal d'excitation ou un balayage de fréquence de signal d'excitation avec une fréquence de signal d'excitation variable pour former une oscillation ;
faire varier (200) le signal d'excitation par rapport à la fréquence de signal d'excitation et/ou l'amplitude de signal d'excitation avec lesquelles les spires chauffantes sont excitées et déterminer (300) au moins un signal de résonance, en particulier une amplitude de signal de résonance ou une fréquence de signal de résonance, de la zone de soudure ou des composants soudés entre eux ;
comparer (400) le signal de résonance déterminé avec au moins une valeur de référence pour le signal de résonance de la zone de soudure ou des composants soudés ensemble, dans lequel on conclut qu'un cordon de soudure est correct si un écart entre le signal de résonance déterminé et la au moins une valeur de référence ne dépasse pas une valeur maximale.

2. Procédé selon la revendication 1, dans lequel, lors de la variation (200) de la fréquence de signal d'excitation, la fréquence de signal d'excitation est accordée sur une bande de fréquences comprise entre 20 Hz et 6 MHz et de préférence sur une bande de fréquences comprise entre 40 Hz et 100 kHz.

3. Procédé selon la revendication 1 ou 2, dans lequel déterminer (300) le signal de résonance comprend la déterminer au moins une fréquence d'oscillation de flexion, de torsion et/ou longitudinale de la zone de soudure ou des composants soudés entre eux.

4. Procédé selon l'une quelconque des revendications précédentes, dans lequel le signal d'excitation est un signal sinusoïdal, un signal triangulaire ou un signal rectangulaire, et la variation du signal d'excitation comprend la variation de la fréquence de signal d'excitation et de l'amplitude de signal d'excitation.

5. Procédé selon l'une quelconque des revendications précédentes, dans lequel déterminer (300) le signal de résonance comprend déterminer un modèle de résonance, en particulier une courbe de résonance.

6. Procédé selon la revendication 5, comprenant en outre, lors de la comparaison (400) du signal de résonance déterminé avec au moins une valeur de référence, la comparaison (400) du modèle de résonance déterminé ou de la courbe de résonance déterminée avec un modèle de référence ou une courbe de référence.

7. Procédé selon l'une quelconque des revendications précédentes, dans lequel prévoir l'excitation des spires chauffantes comprend prévoir une excitation mécanique, acoustique, électrique, magnétique ou électromagnétique des spires chauffantes.

8. Procédé selon la revendication 7, dans lequel, lors de l'excitation mécanique des spires chauffantes, celles-ci sont excitées indirectement par une action mécanique sur l'un des deux composants, de préférence celui qui fournit les spires chauffantes, en particulier un manchon de raccordement ou un raccord.

9. Procédé selon l'une quelconque des revendications précédentes, dans lequel les spires chauffantes sont excitées par application de courant au moyen d'un dispositif de soudage pour former le cordon de soudure en utilisant la technique de soudage par spires chauffantes, les deux pôles électriques du dispositif de soudage étant à cet effet reliés chacun à l'un de deux contacts du composant comprenant le serpentin chauffant.

10. Procédé selon la revendication 8 ou 9, dans lequel le courant appliqué aux spires chauffantes est pulsé.

11. Procédé selon la revendication 7, dans lequel les spires chauffantes sont excitées mécaniquement, soit directement par l'intermédiaire de contacts électriques pour le raccordement d'un dispositif de soudage aux spires chauffantes, soit indirectement, dans lequel, lors de l'excitation mécanique indirecte, au moins l'un des deux composants soudés ensemble par l'intermédiaire des spires chauffantes sont excitées, par exemple par l'intermédiaire d'un percuteur.

12. Procédé selon l'une quelconque des revendications précédentes, dans lequel une oscillation effectuée par les spires chauffantes à la suite de l'excitation (100) est détectée par un capteur, de préférence un capteur piézoélectrique, qui peut être déplacé le long de la zone de soudage.

13. Procédé selon l'une quelconque des revendications précédentes, dans lequel la valeur de référence est une valeur calculée à partir de propriétés géométriques et mécaniques d'une zone de soudure optimale ou une valeur mesurée sur un arrangement de référence avec une qualité de zone de soudure connue.

14. Procédé selon l'une quelconque des revendications précédentes, dans lequel l'excitation (100) des spires chauffantes est effectuée à l'aide d'un signal d'excitation électromagnétique ou mécanique qui est généré par un excitateur disposé dans ou sur au moins un des deux composants soudés ensemble, qui est conduit par la masse du composant dans la zone de soudure et qui y est transmis aux spires chauffantes.

15. Dispositif pour la mise en œuvre d'un procédé selon l'une quelconque des revendications précédentes, le dispositif comprenant un premier et un deuxième composant thermoplastique (1, 2) reliés entre eux par une zone de soudage, le premier composant (1) présentant des spires chauffantes disposées dans la zone de soudage, dans lequel le dispositif comprend un oscillateur (3) qui est couplé mécaniquement, électriquement et/ou magnétiquement aux spires chauffantes, **caractérisé en ce que** le deuxième composant (2) comprend au moins un capteur de vibrations (4) qui est adapté pour détecter un signal de résonance transmis de la zone de soudure au deuxième composant (2).

16. Dispositif selon la revendication 15, dans lequel le générateur de vibrations (3) est un générateur de vibrations mécaniques qui est fixé au premier composant (1) sur la circonférence extérieure du premier composant (1).

17. Dispositif selon la revendication 15 ou 16, dans lequel au moins un capteur de vibrations (4) est un capteur de vibrations mécanique qui est fixé sur la circonférence extérieure du deuxième composant (2) sur le deuxième composant (2).

18. Dispositif selon la revendication 17, dans lequel au moins un capteur de vibrations (4) est fixé sur le deuxième composant (2) adjacent au premier composant (1) ou directement en amont du premier composant (1).
